# EUROPÄISCHE PATENTSCHRIFT

(11) **EP 0 664 313 B1**
(45) Veröffentlichungstag und Bekanntmachung des Hinweises auf die Patenterteilung: **16.09.1998**
(21) Anmeldenummer: 95100237.7
(22) Anmeldetag: 10.01.1995
(51) Int. Cl.: C08J 9/34, B29C 33/42

(54) **Schaumstoff-Formteile mit strukturierter Oberfläche**
Foamed articles having a structured surface
Articles de mousse à surface structurée

(30) Priorität: 20.01.1994 DE 4401579
(43) Veröffentlichungstag der Anmeldung: 26.07.1995
(73) Patentinhaber: BASF AKTIENGESELLSCHAFT, 67056 Ludwigshafen (DE)
(72) Erfinder: Tatzel, Hermann, D-69469 Weinheim (DE); Haardt, Udo, D-68647 Biblis (DE); Domas, Friedrich, D-68804 Altlussheim (DE)

(56) Entgegenhaltungen:
- EP-A- 0 558 989
- DE-A- 2 741 342
- GB-A- 1 177 428
- DATABASE WPI Week 9211, Derwent Publications Ltd., London, GB; AN 92-083660 & JP-A-4 025 439 (YG IKEDA KAKO ET AL.)
- DATABASE WPI Week 8439, Derwent Publications Ltd., London, GB; AN 84-239992 & JP-A-59 142 122 (SEKISUI PLASTICS KK)
- DATABASE WPI Week 8706, Derwent Publications Ltd., London, GB; AN 87-040983 & JP-A-62 000 536 (KOJIMA PRESS KOGYO)

## Beschreibung

Die Erfindung betrifft ein Verfahren zur Herstellung von Partikelschaumstoff-Formteilen auf der Basis von Olefinpolymerisaten mit verdichteter, strukturierter Außenhaut.

Schaumstoff-Formteile aus Olefinpolymerisaten haben große Bedeutung erlangt als stoßdämpfende Verpackungen und Verpackungsteile sowie als stoß- und schockabsorbierende Teile im Ausbau von Kraftfahrzeugen, z.B. als Kern von Stoßstang-Systemen Konsolen oder Armaturentafeln. Entsprechend den gewünschten mechanischen Eigenschaften des Formteils variieren die einzelnen Formteile in Dichte und Dicke. Dennoch haben daraus hergestellte Formteile wegen ihrer unbefriedigenden Oberfläche noch keine Verwendung als Sichtteile im Außen- und im Innenraum von Kraftfahrzeugen gefunden.

Es ist bekannt, daß die oberflächliche Erwärmung von in einer bedüsten Form komprimierten Partikelschaumstoffen auf eine Temperatur, bei der das Polymer zu schmelzen beginnt, im allgemeinen zu einer relativ rauhen, unschönen Oberfläche führt, in der die Partikelgrenzen zwischen den einzelnen plattgedrückten Schaumstoffpartikeln noch sichtbar sind, und die Düsen auf der Formteiloberfläche ihr Abbild hinterlassen.

In der EP-A 558 989 ist ein Verfahren zur Herstellung einer strukturierten Oberfläche an einem Schaumstoff-Formkörper aus Polypropylenpartikeln beschrieben. Dabei wird die Oberflächenschicht des Formkörpers zunächst plastifiziert und dann prägebearbeitet. Bevorzugt wird die Oberfläche mit einem heißen Prägestempel berührt, wobei eine Schmelzeschicht entsteht, in die der Prägestempel eingedrückt wird. Grundsätzlich ist es auch möglich, die Oberflächenschicht erst aufzuheizen, z.B. mit Infrarot-Strahlen und dann einen kalten Prägestempel in die Schmelzschicht einzupressen. In beiden Fällen entsteht eine verhältnismäßig dicke Außenhaut in der Größenordnung von 0,5 bis 3 mm, was zu einer unerwünschten Volumenverminderung des Formkörpers führt.

Bei dem Verfahren nach der JP-A-40 25 439 wird an die innere Oberfläche der Werkzeugform eine luftdurchlässige poröse Platte angelegt, welche eine Strukturierung der Formteiloberfläche bewirkt. Dies ist eine apparativ umständliche Arbeitsweise; außerdem dürfte es schwierig sein, mit einer verhältnismäßig steifen Platte sphärisch unregelmäßige Werkzeugoberflächen zu belegen.

Der Erfindung lag also die Aufgabe zugrunde, ein einfaches Verfahren zur Herstellung von Partikelschaumstoff-Formteilen mit einer dünnen strukturierten Außenhaut bereitzustellen.

Gegenstand der Erfindung ist demzufolge ein Verfahren zur Herstellung von Partikelschaumstoff-Formteilen auf der Basis von Olefinpolymerisaten mit einem Kern und mindestens einer strukturierten Außenhaut mit einer Dicke von 0,01 bis 0,3 mm durch Einfüllen von Schaumpartikeln in ein geschlossenes, perforiertes Formwerkzeug und Einblasen von Heißdampf durch die Perforierungen der Formwände, wobei die Schaumpartikel expandieren, die Form vollständig ausfüllen und an den Grenzflächen miteinander verschweißen, das dadurch gekennzeichnet ist, daß mindestens eine Formwand keine Perforierungen aufweist, sondern an der Innenfläche strukturiert ist. Die Dicke der strukturierten Außenhaut beträgt vorzugsweise 0,02 bis 0,2 mm und insbesondere 0,03 bis 0,1 mm.

Olefinpolymerisate im Sinne der Erfindung sind kristalline Olefinpolymerisate, deren Röntgenkristallinität bei 25°C über 25 % liegt. Für das Verfahren eignen sich Polyethylene niedriger, mittlerer und hoher Dichte, beispielsweise der Dichte 0,916 bis 0,965, vorzugsweise 0,920 bis 0,935 g/cm³, wie sie nach Hoch-, Nieder- und Mitteldruckverfahren hergestellt werden, Polypropylen sowie Ethylen- und Propylencopolymere, die mindestens 50 Mol.-% Ethylen- und/oder Propylen-Einheiten enthalten. Geeignete Comonomere sind beispielsweise α-Alkene mit bis zu 12 Kohlenstoffatomen, wie Propylen, Buten, Penten, Hexen, Octen, ferner Vinylester, wie Vinylacetat, Ester der Acrylsäure, Methacrylsäure, Maleinsäure oder Fumarsäure von Alkoholen, die 1 bis 8 C-Atome enthalten. Die Olefinpolymerisate besitzen im allgemeinen einen Schmelzindex MFI (230; 2,16) (nach DIN 53 735) zwischen 0,5 und 15, vorzugsweise zwischen 1 und 12 und einen Schmelzbereich zwischen 100°C und 170°C, sowie eine Scherviskosität zwischen 1 x 10³ und 1 x 10⁶, gemessen in einem Rotationsviskosimeter bei 150°C und einem Kreisfrequenzbereich von 10⁻¹ bis 10²s⁻¹. Auch Mischungen verschiedener Olefinpolymerisate können verwendet werden.

Bevorzugt eingesetzt werden Ethylen-Propylen-Copolymere und Copolymere von Ethylen und/oder Propylen mit einem C₄- bis C₈-α-Olefin.

Besonders bevorzugte Ethylen-Propylen-Copolymere sind Copolymere aus 0,5 bis 6 Gew.-% Ethylen und 94 bis 99,5 Gew.-% Propylen.

Besonders bevorzugte Copolymere von Ethylen, Propylen und einem C₄ bis C₈-α-Olefin sind Copolymere aus 0,5 bis 6 Gew.-%, vorzugsweise 1 bis 6 Gew.-%, insbesondere 1,5 bis 6 Gew.-% Ethylen, 88 bis 99 Gew.-%, vorzugsweise 89 bis 98 Gew.-%, insbesondere 90 bis 97 Gew.-% Propylen und 0,5 bis 6 Gew.-%, vorzugsweise 1 bis 6 Gew.-%, insbesondere 1 bis 5 Gew.-% eines C₄- bis C₈-α-Olefins, wie Buten-1, Penten-1, Hexen-1, Hepten-1 oder Octen-1. Die Copolymeren sollen einen G-Modul von 100 bis 800, vorzugsweise 100 bis 700, insbesondere 150 bis 600 N/mm² aufweisen.

Die Herstellung der Copolymeren erfolgt in bekannter Weise durch Copolymerisation der Monomeren mittels Übergangsmetallkatalysatoren. Die Copolymeren zeigen einen überwiegend statistischen Aufbau, sie sind im allgemeinen linear aufgebaut und im allgemeinen unvernetzt. Der Kristallitschmelzpunkt, bestimmt nach der DSC-Methode, liegt im allgemeinen zwischen 110 und 155, insbesondere zwischen 115 und 150°C. Die Schmelzwärme, bestimmt nach der DSC-Methode, liegt im allgemeinen zwischen 30 und 100 J/g, vorzugsweise zwischen 35 und 100 J/g. Vorzugsweise werden Copolymere mit einem Schmelzindex MFI (230; 2,16) (nach DIN 53 735) von 0,5 bis 15, insbesondere 1 bis 12 [g/10 min] verwendet.

Der Schaumstoff ist ein sogenannter Partikelschaumstoff, wie er durch Verschweißen von Schaumstoffpartikeln üblicherweise mit einem mittleren Durchmesser von 2 bis 8 mm, vorzugsweise 3 bis 6 mm, erhältlich ist. Die mittlere Dichte des Schaumstoffs, d.h. die Dichte gemittelt über alle Dichtebereiche des Formkörpers, liegt im allgemeinen zwischen 0,015 und 0,100 g/cm³, vorzugsweise zwischen 0,020 und 0,080 g/cm³, insbesondere zwischen 0,030 und 0,060 g/cm³.

Die Herstellung der Schaumstoffpartikel ist an sich bekannt. Sie erfolgt im allgemeinen durch Imprägnierung der teilchenförmigen Olefinpolymerisate in wäßriger Suspension mit einem Treibmittel unter Druck und erhöhter Temperatur und anschließendes Entspannen der Suspension (vgl. EP-A-0 053 333).

Bei dem erfindungsgemäßen Verfahren zur Herstellung von Schaumstoff-Formteilen mit strukturierter Oberfläche werden Schaumstoffpartikel in ein geschlossenes, perforiertes Formwerkzeug eingefüllt, wobei nach den an sich bekannten Druckfüll- oder Tauchkanten-Verfahren oder mit einer Kombination von Druckbeladung mit den beiden genannten Verfahren gearbeitet werden kann. Danach wird Heißdampf durch die Düsen der Formwände eingeblasen, wobei die Schaumpartikel expandieren, die Luft aus den Zwickeln verdrängen und die Form vollständig ausfüllen und schließlich an den Grenzflächen miteinander verschweißen. Die Temperatur des Heißdampfes sollte oberhalb des Kristallitschmelzpunktes des Olefinpolymerisats, aber unterhalb des DSC-Peaks beim 2. Aufheizen der Schaumstoffpartikel liegen. Im Fall der bevorzugten Propylen/Ethylen-Copolymeren wird mit Heißdampf einer Temperatur zwischen 130 und 150°C und einem Druck von 3 bis 5 bar gearbeitet.

Wesentlich ist dabei, daß mindestens eine Formwand keine Perforierungen sondern eine strukturierte Innenfläche aufweist. Natürlich muß mindestens eine Formwand noch Perforierungen aufweisen, damit der Heißdampf in die Form eingeblasen werden kann; es ist also nicht möglich, dem Schaumstoff-Formteil allseits eine strukturierte Oberfläche zu verleihen. Die Strukturierung der Forminnenwand kann man z.B. durch Aufkleben eines Teflongewebes oder einer andersartig gemusterten Kunststoffplatte auf ein Werkzeugholzmodell erreichen, das man anschließend abgießt und somit auf die Forminnenwand überträgt. Dabei kann es zweckmäßig sein, die strukturierte Forminnenwand zusätzlich zu beheizen um die Prägung der entsprechenden Formteiloberfläche zu intensivieren.

Die Partikelschaumstoff-Formteile mit strukturierter Außenhaut können noch übliche Zusatzstoffe enthalten, wie Farbstoffe, Pigmente, Füllstoffe, Verstärkungsstoffe, Flammschutzmittel, Formtrennmittel, Antistatika, Stabilisatoren und andere Hilfsmittel in wirksamen Mengen.

Die Formteile können nach vorhergehender Corona- oder Plasma-Behandlung lackiert werden. Sie finden vorzugsweise im Kraftfahrzeugbau Verwendung, z.B. als Türverkleidungen, Armaturentafeln, Konsolen, Sonnenblenden, Stoßstangen, Spoiler und dergleichen.

Aufgrund des artgleichen Aufbaus von Außenhaut und Kern ist ein praktisch sortenreines Recycling ohne Zerlegung in Einzelkomponenten möglich.

Ein besonderer Vorteil der Erfindung liegt darin, daß die Schaumstoff-Formkörper zu einem großen Teil Recyclatpartikel enthalten können, wie sie bei der Zerkleinerung gebrauchter Schaumstoff-Formteile anfallen. Hierbei werden im allgemeinen Schaumstoff-Recyclatpartikel aus Olefinpolymerisaten mit einem Partikelgewicht von 1 bis 100 mg/Partikel eingesetzt.

Der einsetzbare Anteil an Recyclatpartikeln hängt von deren Aufbau und Eigenschaften (Zusammensetzung des Polymeren, einer eventuell vorliegenden Beschichtung etc.) ab. Es wurde jedoch überraschend gefunden, daß selbst bei einem relativ hohen Anteil von Recyclatpartikeln die im allgemeinen schlechtere Verschweißung der Recyclatpartikel untereinander oder mit frisch geschäumten Olefinpolymerisat-Perlen nicht dazu führt, daß die mechanischen Eigenschaften der Formteile verschlechtert werden. Vorzugsweise bestehen die erfindungsgemäßen Formteile dieser Ausführungsform bis zu 50 Gew.-% aus Recyclatpartikeln.

## Patentansprüche

1. Verfahren zur Herstellung von Partikelschaumstoff-Formteilen auf der Basis von Olefinpolymerisaten mit einem Kern und mindestens einer strukturierten Außenhaut mit einer Dicke von 0,01 bis 0,3 mm durch Einfüllen von Schaumpartikeln in ein geschlossenes, perforiertes Formwerkzeug und Einblasen von Heißdampf durch die Perforierungen der Formwände, wobei die Schaumpartikel expandieren, die Form vollständig ausfüllen und an den Grenzflächen miteinander verschweißen, dadurch gekennzeichnet, daß mindestens eine Formwand keine Perforierungen aufweist, sondern an der Innenfläche strukturiert ist.

2. Verfahren nach Anspruch 1, dadurch gekennzeichnet, daß das Olefinpolymerisat ein Ethylen-Propylen-Copolymer oder ein Copolymer von Ethylen und/oder Propylen mit einem C₄- bis C₈-α-Olefin ist.

3. Verfahren nach Anspruch 1, dadurch gekennzeichnet, daß die Formteile bis zu 50 Gew.-% aus Recyclatpartikeln bestehen.

## Claims

1. A process for producing moldings made of molded foam, the moldings being based on olefin polymers and having a core and at least one textured outer skin of a thickness of from 0.01 to 0.3 mm, by placing foam particles into a closed, perforated mold and blowing in superheated steam through the perforations in the mold wall, where the foam particles expand, fill the mold completely, and fuse with one another at the interfaces, wherein at least one mold wall has no perforations but is textured on its inner surface.

2. A process as claimed in claim 1, wherein the olefin polymer is an ethylene-propylene copolymer or a copolymer of ethylene and/or propylene with a C₄-C₈ α-olefin.

3. A process as claimed in claim 1, wherein the moldings are composed of up to 50% by weight of particles of recycled material.

## Revendications

1. Procédé pour la fabrication d'éléments moulés en mousse particulaire à base de polymères d'oléfines, comprenant un noyau et au moins une peau structurée possédant une épaisseur de 0,01 à 0,3 mm par remplissage d'un moule perforé fermé à l'aide de particules de mousse et par insufflation de vapeur chaude à travers les perforations des parois du moule, dans lequel les particules de mousse subissent une expansion, remplissent complètement le moule et se soudent l'une à l'autre aux surfaces de séparation, caractérisé en ce qu'au moins une paroi du moule ne présente pas de perforations, mais est structurée sur la surface interne.

2. Procédé selon la revendication 1, caractérisé en ce que le polymère d'oléfine est un copolymère d'éthylène-propylène ou un copolymère d'éthylène et/ou de propylène avec une α-oléfine en C₄-C₈.

3. Procédé selon la revendication 1, caractérisé en ce que les éléments moulés sont constitués, jusqu'à concurrence de 50% en poids, par des particules recyclées.
